(19)

Europäisches
Patentamt

European
Patent Office

Office européen
des brevets

(11) **EP 3 993 926 B1**

(12) **EUROPEAN PATENT SPECIFICATION**

(45) Date of publication and mention
of the grant of the patent:
**14.02.2024 Bulletin 2024/07**

(21) Application number: **20737571.8**

(22) Date of filing: **30.06.2020**

(51) International Patent Classification (IPC):
**B33Y 80/00** (2015.01)   **H01F 5/00** (2006.01)
**B22F 5/00** (2006.01)   **B22F 3/105** (2006.01)
**B22F 10/00** (2021.01)   **B22F 10/47** (2021.01)
**B33Y 10/00** (2015.01)   **H01F 41/04** (2006.01)

(52) Cooperative Patent Classification (CPC):
**B33Y 80/00; B22F 10/00; B22F 10/47; B33Y 10/00;
H01F 41/04;** B22F 2005/004; Y02P 10/25

(86) International application number:
**PCT/IB2020/056194**

(87) International publication number:
**WO 2021/038321 (04.03.2021 Gazette 2021/09)**

(54) **FABRICATION OF CONDUCTIVE COILS BY ADDITIVE MANUFACTURING**

HERSTELLUNG VON LEITFÄHIGEN SPULEN DURCH GENERATIVE FERTIGUNG

FABRICATION DE BOBINES CONDUCTRICES PAR FABRICATION ADDITIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2019 US 201962892079 P**

(43) Date of publication of application:
**11.05.2022 Bulletin 2022/19**

(73) Proprietor: **IO Tech Group, Ltd.**
**London W10 6AZ (GB)**

(72) Inventor: **ZENOU, Michael**
**London W10 6AZ (GB)**

(74) Representative: **Boult Wade Tennant LLP**
**Salisbury Square House**
**8 Salisbury Square**
**London EC4Y 8AP (GB)**

(56) References cited:
**CN-B- 105 632 893**

## Description

### RELATED APPLICATIONS

This application claims priority to U.S. Provisional Application No. 62/892,079, filed 27 August 2019.

### FIELD OF THE INVENTION

The present invention relates to methods of fabricating conductive coils by additive manufacturing techniques.

### BACKGROUND

Conductive coils find application in a variety of fields as components of electric circuits. For example, such coils may be used as components of electromagnets, inductors, transformers, transducers, and electric machines. With the advent of additive manufacturing technologies there have been efforts to fabricate conductive coils by, for example, extrusion, powdered metal sintering, and metal ink-jet printing. Metal ink-jet printing is a form of metal deposition in which a metal source such as a thin wire or foil is heated, for example by a laser beam, to create metal droplets which are directed by gravity and/or electromagnetic fields to a substrate. Metal deposition, extrusion, powdered metal sintering, and other forms of additive manufacturing build three dimensional articles from digital files describing those articles by successively adding material layer-by-layer in a pattern defined by the digital file.

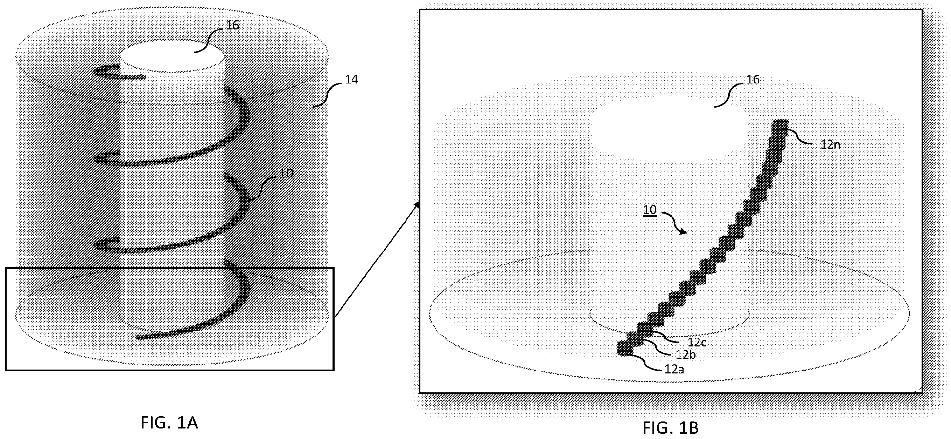

Referring to Figures 1A and 1B, in the case of a conductive coil 10 individual coil elements 12a, 12b, 12c, ... 12n, are printed in successive layers so as to partially overlap a most-recently printed element and thereby define a helical pattern of coil elements that collectively make up the conductive coil 10. In some cases, the coil elements 12a - 12n are printed within a supporting material matrix 14 and/or about an inner core 16, which act as scaffolds to keep the coil under construction intact as the coil elements fuse with one another. The material matrix 14 and core 16 are removed post-printing. Each coil element 12a - 12n is a few voxels in size.

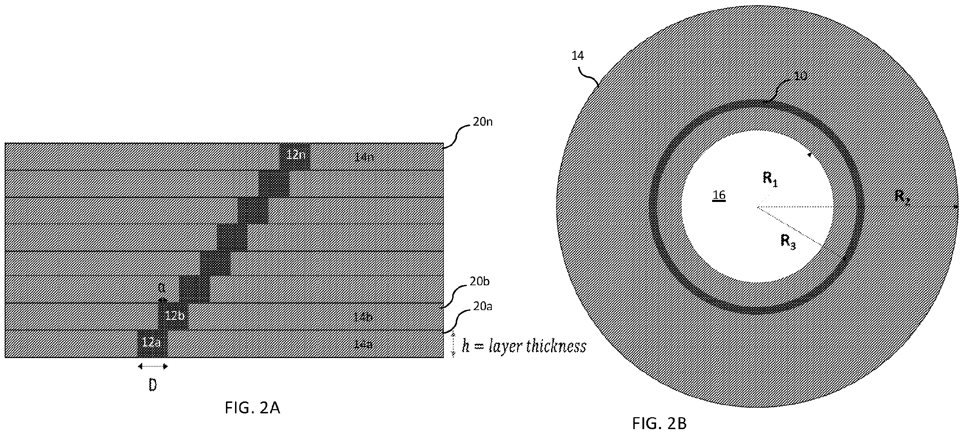

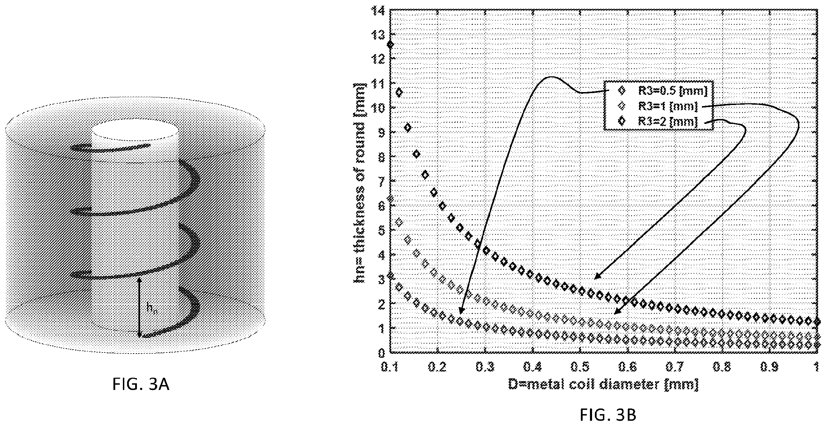

Figures 2A and 2B further illustrate the layer-by-layer nature of the printing of the coil elements. For each layer 20a, 20b, ... 20n of the print process, a portion of the layer is made up of a respective coil element 12a, 12b, ... 12n, and a respective supporting material element 14a, 14b, ... 14n. For each successive layer, the respective coil elements have a width "D" and overlap one another by an amount "$\alpha$". The layers have thickness "h". For a given coil of radius $R_3$, the supporting material matrix may be printed with an inner diameter $R_1$ (which is also the diameter of the inner core 16 if present) and outer diameter $R_2$. As shown in Figure 3A, such a geometry limits the number of turns per unit length of the coil 10 as the distance "$h_n$" between successive turns of the coil is given by:

$$h_n = \frac{2\pi R_3 h}{(1-\alpha)D}$$

The chart in Figure 3B illustrates the effect of the coil diameter D on the "thickness" $h_n$ of a single turn of a coil for different values of $R_3$ for the case of a layer thickness h of 50$\mu$m.

A prior art method for preparing a micro-inductor based on 3D printing has been disclosed in CN 105632893 B.

### SUMMARY OF THE INVENTION

Embodiments of the present invention include methods of fabricating a conductive coil by an additive manufacturing process, as specified in claims 1 and 6. The coil is printed as a plurality of partially complete rounds. Each partially complete round is printed by the additive manufacturing process as at least a portion of a respective layer of material. Also printed are pillars interconnecting successive ones of the partially complete rounds in different ones of the respective layers of material. The pillars may be vertical, or near-vertical. Positions of the pillars between successive ones of the plurality of partially complete rounds may be staggered across the circumference of the partially complete rounds. In some cases, following printing of one of the plurality of partially complete rounds in a respective layer of material, for a number of successive layers of material corresponding to a desired pillar height, only a connecting pillar is printed.

According to the invention, scaffolding elements are printed as part of each respective layer of material concurrently with printing the plurality of partially complete rounds. Such scaffolding elements may include a supporting material matrix and/or a core internal to the partially complete rounds of the coil.

For each successive partially complete round, that successive partially complete round is preferably printed such that it overlaps a last printed one of the pillars. As indicated, positions of the pillars between successive ones of the plurality of partially complete rounds may be staggered across the circumference of the partially complete rounds by an azimuthal separation distance from an immediately previous pillar. Further, some of the pillars interconnecting successive ones of the partially complete rounds may be printed to different heights than others of the pillars interconnecting successive ones of the partially complete rounds.

In some embodiments, within each respective layer of material, concentric ones of the plurality of partially complete rounds are printed offset from one another, and the pillars interconnecting successive ones of the partially complete rounds of each of concentric ones of the plurality of partially complete rounds are printed so as to interconnect those of the partially complete rounds having a common radius. A connection between the concentric ones of the plurality of partially complete rounds is printed to form a junction (often only a single junction) between the concentric ones of the plurality of partially complete rounds. The junction may be near one end of columns of the concentric ones of the plurality of partially complete rounds. In some embodiments, the concentric ones of the plurality of partially complete rounds are offset from one another by a common radial distance. However, in other embodiments, the concentric ones of the plurality of partially complete rounds are printed about different centers.

Again, the pillars may be vertical, or near-vertical, and positions of the pillars between successive ones of the plurality of partially complete rounds of each of concentric ones of the plurality of partially complete rounds may be staggered across the circumference of the partially complete rounds. As mentioned, scaffolding elements (e.g., a supporting material matrix and/or a core internal to the partially complete rounds of the coil) are printed as part of each respective layer of material concurrently with printing the concentric ones of the plurality of partially complete rounds. And, some of the pillars interconnecting successive ones of the partially complete rounds of each of concentric ones of the plurality of partially complete rounds may be printed to different heights than others of the pillars interconnecting successive ones of the partially complete rounds.

## BRIEF DESCRIPTION OF THE DRAWINGS

The present invention is illustrated by way of example, and not limitation, in the figures of the accompanying drawings, in which :

Figures 1A and 1B illustrate examples of a conductive coil formed by successively printing material, layer-by-layer in a pattern.

Figures 2A and 2B further illustrate the layer-by-layer nature of the printing of the coil elements of the coil illustrated in Figures 1A and 1B.

Figure 3A illustrates how the geometry of a coil limits the number of turns per unit length of the coil as the distance "$h_n$" between successive turns is varied.

The chart in Figure 3B illustrates the effect of coil diameter D on the "thickness" $h_n$ of a single turn of a coil for different radial values.

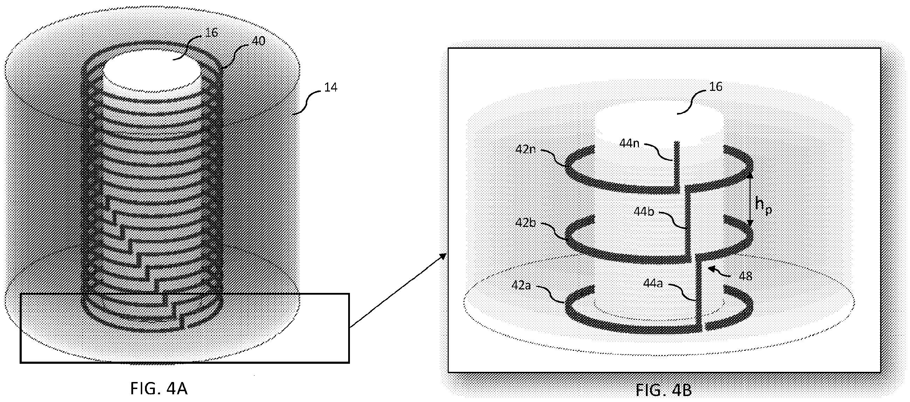

Figures 4A and 4B illustrate examples of coils printed as nearly complete rounds within a layer, with successive rounds being interconnected by vertical, or near-vertical, pillars (not according to the invention).

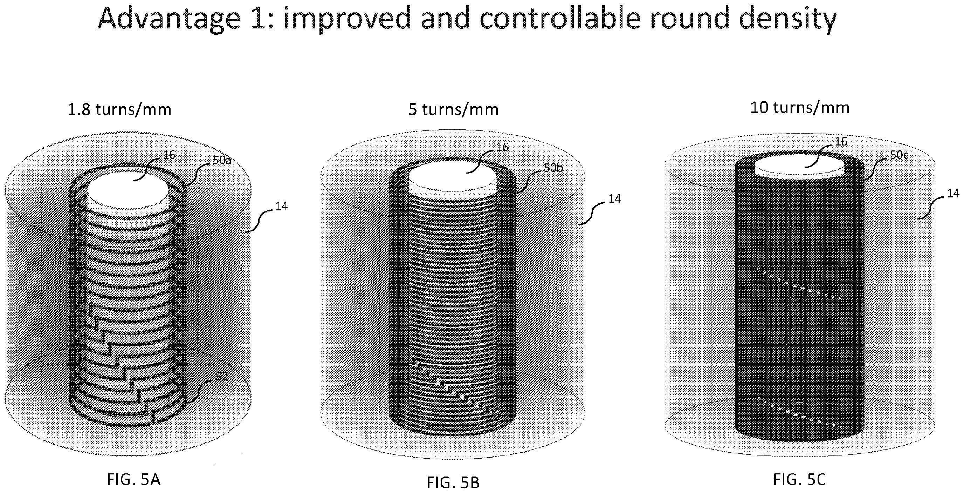

Figures 5A-5C illustrate the effect of varying pillar height, $h_p$, for coils fashioned as shown in Figures 4A and 4B.

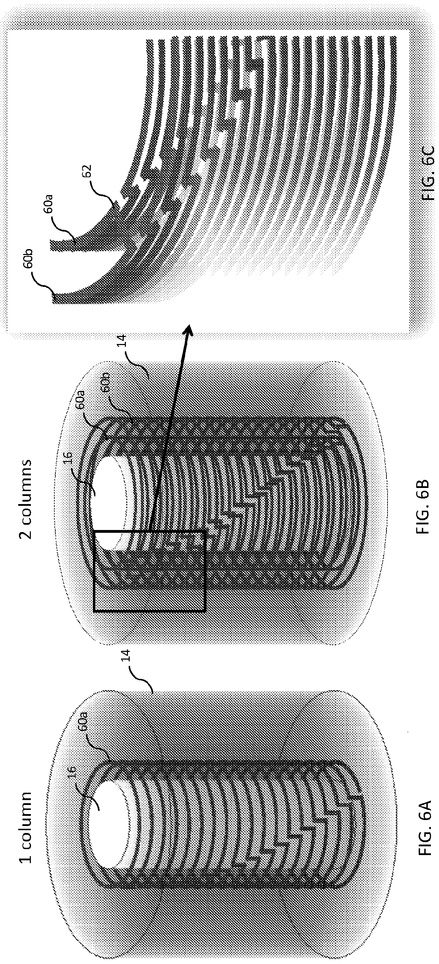

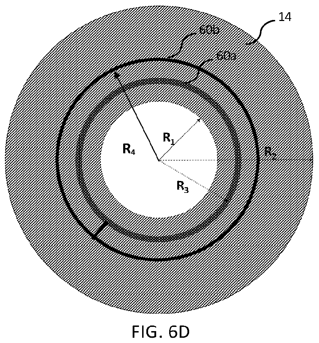

Figures 6A-6D show a further embodiment of the invention in which concentric coil columns are printed one about another.

## DESCRIPTION

Described herein are new methods of fabricating conductive coils by additive manufacturing techniques. Referring to Figures 4A and 4B, coils 40 are printed as nearly complete rounds 42a, 42b, ... 42n, each within a single layer, with successive rounds being interconnected by vertical, or near-vertical, pillars 44a, 44b, ... 44n. By varying the height "$h_p$" of a connecting pillar 44n, the density of the rounds can be varied/controlled. As shown in Figure 4A, the positioning of pillars 44a, ... 44n between successive rounds 42a, ... 42n can be staggered across the circumference of the rounds so that electrical shorts are avoided and packing density of the rounds can be varied.

A nearly complete round 42a, 42b, ... 42n is printed in a layer. Then for a number of successive layers equal to a desired pillar height $h_p$, only the connecting pillar 44a, 44, .. 44n is printed. Scaffolding elements such as a supporting material matrix 14 and/or inner core 16 are also printed as part of each layer. When a desired pillar height $h_p$ has been reached, another nearly complete round 42a, 42b, ... 42n is printed, taking care to ensure that the new round overlaps the last printed connecting pillar segment, and the process repeats. As noted above, for each successive connecting pillar 44a, 44, .. 44n that is printed, its location may be offset by a desired azimuthal separation distance from an immediately previous pillar. The result for a number of layers printed in succession is a pattern resembling overlaid rounds with notched or stepped portions 48 that proceed in a diagonal fashion over a vertical segment of the coil 40. The stepped portions 48 are defined by gaps in the rounds.

Figures 5A-5C illustrate the effect of varying the pillar height $h_p$. In Figure 5A, a coil 50a is fashioned with a pillar height $h_p$ that corresponds to a density of 1.8 turns/mm; that is, 1.8 rounds 52 per millimeter of displacement from a selected starting round. In Figure 5b, the pillar height $h_p$ has been reduced, thereby increasing the coil density to 5 turns/mm. And, in Figure 5C, the pillar height $h_p$ has been further reduced, increasing the coil density to 10 turns/mm. Coils of different densities may thus be fashioned by printing connecting pillars of different heights. Usually, the density of a coil will not vary (at least not intentionally so) over its length, however, this need not necessarily always be the case. Indeed, in some embodiments a single coil having different densities throughout its length may be fashioned by printing sections of the coil with connecting pillars of different heights than are found in other sections of the coil. Such a coil may find application where shaping of a magnetic field, e.g., in terms of magnetic flux lines and/or field strengths, is desirable.

Figures 6A-6D show an embodiment of the invention where concentric coil columns 60a, 60b are printed one about another. As illustrated in Figure 6C, the two columns are connected to one another at a single junction 62 at or near one end of the concentric columns. Within each layer, inner coil 60a is printed with rounds having a radius $R_3$, while the outer coil 60b is printed with rounds having a radius $R_4$. For each layer, the supporting structure 14 is printed as a cross-section of a hollow cylinder with inner radius $R_1$ and outer radius $R_2$. In some cases, the cylinder of supporting material need not be hollow, or the inner portion of the cylinder of supporting material may be formed of an inner core of radius $R_1$ of different material.

Although this example illustrates two concentric coils, in other embodiments varying numbers of concentric coil columns may be printed to provide desired characteristics. Each coil column so printed is fashioned so that successive connecting pillars of the rounds are offset by desired azimuthal separation distances from an immediately previous pillar. As with the example in Figures 5A-5C, the pillar separation distances may be maintained constant over an individual coil column, or they may be varied over the length of a coil column, again to provide designed electromagnetic characteristics. The azimuthal positions of the connecting pillars of different coil columns may be the same for each corresponding round along the lengths of the respective coil columns, or they may be different. Also, the coils may be printed about a common center or about different centers so as to provide desired magnetic field characteristics when used.

The printing techniques described herein may be used in connection with any additive manufacturing technique in which the three dimensional coil is formed layer-by-layer through material deposition, accretion, growth, etc., according to pattern cross-sections describing those layers as stored in a digital file. Thus, the present techniques may be used with, for example, extrusion or other forms of fused deposition modeling, sintering, metal ink-jet printing and other forms of metal deposition, as well as stereolithography, digital light processing, laminated object manufacturing, or forms of laser melting. In addition, although the forgoing discussion related to conductive metal coils, in general the techniques described herein may be used to fashion coils from materials other than conductors, for example, polymers.

Thus, methods of fabricating conductive coils by additive manufacturing techniques have been described.

**Claims**

1. A method of fabricating a conductive coil (40) by an additive manufacturing process, the method comprising printing said coil (40) as a plurality of partially complete rounds (42a, 42b, ... 42n), each partially complete round (42a, 42b, ... 42n) printed by the additive manufacturing process as at least a portion of a respective layer of material, printing scaffolding elements as part of each respective layer of material concurrently with printing the plurality of partially complete rounds (42a, 42b, ... 42n), and printing pillars (44a, 44, ... 44n) interconnecting successive ones of the partially complete rounds (42a, 42b, ... 42n) in different ones of the respective layers of material, **characterised in that** within each respective layer of material, printing a plurality of columns (60a, 60b) of the plurality of partially complete rounds (42a, 42b, ... 42n) offset from one another about different respective centers, printing the pillars (44a, 44b, ... 44n) interconnecting successive ones of the partially complete rounds within each respective column so as to interconnect those of the partially complete rounds having a common radius, and printing a connection (62) between the respective columns of the plurality of columns of the plurality of partially complete rounds at a junction.

2. The method of claim 1, wherein the pillars (44a, 44, ... 44n) are vertical, or near-vertical.

3. The method of claim 1, wherein the scaffolding elements (14) comprise at least one of a supporting material matrix (14) and a core (16) internal to the partially complete rounds (42a, 42b, ... 42n) of the coil (40).

4. The method of any of the foregoing claims, wherein for each successive partially complete round (42a, 42b, ... 42n), printing said successive partially complete round such that it overlaps a last printed one of the pillars (44a, 44, ... 44n).

5. The method of any of the foregoing claims, wherein some of the pillars (44a, 44b, ... 44n) interconnecting successive ones of the partially complete rounds (42a, 42b, ... 42n) are printed to different heights than others of the pillars interconnecting successive ones of the partially complete rounds.

6. A method of fabricating a conductive coil (40) by an additive manufacturing process, the method comprising printing said coil (40) as a plurality of partially complete rounds (42a, 42b, ... 42n), each partially complete round (42a, 42b, ... 42n) printed by the additive manufacturing process as at least a portion of a respective layer of material, printing scaffolding elements as part of each respective layer of material concurrently with printing the plurality of partially complete rounds (42a, 42b, ... 42n), and printing pillars (44a, 44, ... 44n) interconnecting successive ones of the partially complete rounds (42a, 42b, ... 42n) in different ones of the respective layers of material, **characterised in that** within each respective layer of material, printing concentric ones (60a, 60b) of the plurality of partially complete rounds (42a, 42b, ... 42n) offset from one another, printing the pillars (44a, 44b, ... 44n) interconnecting successive ones of the partially complete rounds of each of concentric ones (60a, 60b) of the plurality of partially complete rounds so as to interconnect those of the partially complete rounds (42a, 42b, ... 42n) having a common radius, and printing a connection (62) between the concentric ones of the plurality of partially complete rounds at a junction.

7. The method of claim 6, wherein the pillars (44a, 44b, ... 44n) are vertical, or near-vertical.

8. The method of claim 7, wherein positions of the pillars (42a, 42b, ... 42n) between successive ones of the plurality of partially complete rounds (42a, 42b, ... 42n) of each of concentric ones (60a, 60b) of the plurality of partially complete rounds are staggered across a circumference of the partially complete rounds.

9. The method of claim 8, wherein the scaffolding elements comprise at least one of a supporting material matrix (14) and a core (16) internal to the partially complete rounds of the coil.

10. The method of any of claims 6-9, wherein the junction (62) is a single junction.

11. The method of any of claims 6-10, wherein the junction (62) is near one end of columns of the concentric ones (60a, 60b) of the plurality of partially complete rounds (42a, 42b, ... 42n).

12. The method of any of claims 6-11, wherein some of the pillars (44a, 44b, ... 44n) interconnecting successive ones of the partially complete rounds (42a, 42b, ... 42n) of each of concentric ones (60a, 60b) of the plurality of partially complete rounds are printed to different heights than others of the pillars interconnecting successive ones of the partially complete rounds.

13. The method of any of claims 6-12, wherein positions of the pillars (44a, 44b, ... 44n) between successive ones of the plurality of partially complete rounds (42a, 42b, ... 42n) of each of concentric ones (60a, 60b) of the plurality of partially complete rounds are staggered across a circumference of the partially complete rounds.

14. The method of any of claims 6-13, wherein within each respective layer of material, the concentric ones (60a, 60b) of the plurality of partially complete rounds (42a, 42b, ... 42n) are offset from one another by a common radial distance.

**Patentansprüche**

1. Verfahren zur Herstellung einer leitenden Spule (40) durch einen additiven Herstellungsprozess, wobei das Verfahren umfasst:
Drucken der Spule (40) als eine Mehrzahl von teilweise vollständigen Windungen (42a, 42b, ... 42n), wobei jede teilweise vollständige Windung (42a, 42b, ... 42n) durch das additive Herstellungsverfahren als mindestens ein Teil einer jeweiligen Materialschicht gedruckt wird, Drucken von Gerüstelementen als Teil jeder jeweiligen Materialschicht gleichzeitig mit dem Drucken der Mehrzahl von teilweise vollständigen Windungen (42a, 42b, ... 42n), und Drucken von Pfosten (44a, 44, ... 44n), die aufeinander folgende der teilweise vollständigen Windungen (42a, 42b, ... 42n) in verschiedenen der jeweiligen Materialschichten miteinander verbinden, **gekennzeichnet durch**:
Drucken einer Mehrzahl von Säulen (60a, 60b) der Mehrzahl von teilweise vollständigen Windungen (42a, 42b, ... 42n), die voneinander um verschiedene jeweilige Zentren versetzt sind, in jeder jeweiligen Materialschicht; Drucken der Pfosten (44a, 44b, ... 44n), die aufeinanderfolgende der teilweise vollständigen Windungen innerhalb jeder jeweiligen Säule miteinander verbinden, um diejenigen der teilweise vollständigen Windungen miteinander zu verbinden, die einen gemeinsamen Radius haben, und Drucken einer Verbindung (62) zwischen den jeweiligen Säulen der Mehrzahl von Säulen der Mehrzahl von teilweise vollständigen Windungen an einer Verbindungsstelle.

2. Verfahren nach Anspruch 1, bei dem die Pfosten (44a, 44, ... 44n) vertikal oder nahezu vertikal sind.

3. Verfahren nach Anspruch 1, bei dem die Gerüstelemente (14) eine Stützmaterialmatrix (14) und/oder einen Kern (16) im Inneren der teilweise vollständigen Windungen (42a, 42b, ... 42n) der Spule (40) umfassen.

4. Verfahren nach einem der vorhergehenden Ansprüche, bei dem für jede aufeinanderfolgende teilweise vollständige Windung (42a, 42b, ... 42n) die aufeinanderfolgende teilweise vollständige Windung so gedruckt wird, dass sie mit einem zuletzt gedruckten der Pfosten (44a, 44, ... 44n) überlappt.

5. Verfahren nach einem der vorhergehenden Ansprüche, bei dem einige der Pfosten (44a, 44b, ... 44n), die aufeinanderfolgende der teilweise vollständigen Windungen (42a, 42b, ... 42n) miteinander verbinden, bis zu einer anderen Höhe gedruckt werden als andere der Pfosten, die aufeinanderfolgende der teilweise vollständigen Windungen miteinander verbinden.

6. Verfahren zur Herstellung einer leitenden Spule (40) durch einen additiven Herstellungsprozess, wobei das Verfahren umfasst:

Drucken der Spule (40) als eine Mehrzahl von teilweise vollständigen Windungen (42a, 42b, ... 42n) , wobei jede teilweise vollständige Windung (42a, 42b, ... 42n) durch das additive Herstellungsverfahren als mindestens ein Teil einer jeweiligen Materialschicht gedruckt wird, Drucken von Gerüstelementen als Teil jeder jeweiligen Materialschicht gleichzeitig mit dem Drucken der Mehrzahl von teilweise vollständigen Windungen (42a, 42b, ... 42n), und Drucken von Pfosten (44a, 44b, ... 44n), die aufeinanderfolgende der teilweise vollständigen Windungen (42a, 42b, ... 42n) in verschiedenen der jeweiligen Materialschichten miteinander verbinden, **gekennzeichnet durch**:
Drucken von konzentrischen Windungen (60a, 60b) der Mehrzahl von teilweise vollständigen Windungen (42a, 42b, ... 42n) versetzt zueinander innerhalb jeder jeweiligen Materialschicht, Drucken der Pfosten (44a, 44b, ... 44n), die aufeinanderfolgende der teilweise vollständigen Windungen jeder der konzentrischen Windungen (60a, 60b) der Mehrzahl von teilweise vollständigen Windungen miteinander verbinden, um diejenigen der teilweise vollständigen Windungen (42a, 42b, ... 42n), die einen gemeinsamen Radius haben, miteinander zu verbinden, und Drucken einer Verbindung (62) zwischen den konzentrischen Windungen der Mehrzahl von teilweise vollständigen Windungen an einer Verbindungsstelle.

7. Verfahren nach Anspruch 6, bei dem die Pfosten (44a, 44b, ... 44n) vertikal oder nahezu vertikal sind.

8. Verfahren nach Anspruch 7, bei dem die Positionen der Pfosten (42a, 42b, ... 42n) zwischen aufeinanderfolgenden Windungen der Mehrzahl von teilweise vollständigen Windungen (42a, 42b, ... 42n) jeder der konzentrischen Windungen (60a, 60b) der Mehrzahl von teilweise vollständigen Windungen über den Umfang der teilweise vollständigen Windungen gestaffelt sind.

9. Verfahren nach Anspruch 8, bei dem die Gerüstelemente eine Stützmaterialmatrix (14) und/oder einen Kern (16) im Inneren der teilweise vollständigen Windungen der Spule umfassen.

10. Verfahren nach einem der Ansprüche 6-9, bei dem die Verbindungsstelle (62) eine einzelne Verbindungsstelle ist.

11. Verfahren nach einem der Ansprüche 6-10, bei dem die Verbindungsstelle (62) in der Nähe eines Endes von Säulen der konzentrischen teilweise vollständigen Windungen (60a, 60b) aus der Mehrzahl von teilweise vollständigen Windungen (42a, 42b, ... 42n) liegt.

12. Verfahren nach einem der Ansprüche 6 bis 11, bei dem einige der Pfosten (44a, 44b, ... 44n), die aufeinanderfolgende teilweise vollständige Windungen (42a, 42b, ... 42n) unter den konzentrischen Windungen (60a, 60b) aus der Mehrzahl von teilweise vollständigen Windungen miteinander verbinden, bis zu einer anderen Höhe gedruckt werden als andere der Pfosten, die aufeinanderfolgende teilweise vollständige Windungen miteinander verbinden.

13. Verfahren nach einem der Ansprüche 6 bis 12, bei dem die Positionen der Pfosten (44a, 44b, ... 44n) zwischen aufeinanderfolgenden der Mehrzahl von teilweise vollständigen Windungen (42a, 42b, ... 42n) unter den konzentrischen Windungen (60a, 60b) aus der Mehrzahl der teilweise vollständigen Windungen über den Umfang der teilweise vollständigen Windungen gestaffelt sind.

14. Verfahren nach einem der Ansprüche 6-13, bei dem in jeder jeweiligen Materialschicht die konzentrischen Windungen (60a, 60b) aus der Mehrzahl der teilweise vollständigen Windungen (42a, 42b, ... 42n) um einen gemeinsamen radialen Abstand gegeneinander versetzt sind.

## Revendications

1. Procédé de fabrication d'une bobine conductrice (40) par un processus de fabrication additive, le procédé comprenant les étapes consistant à imprimer ladite bobine (40) sous forme d'une pluralité de spires partiellement complètes (42a, 42b,...42n), chaque spire partiellement complète (42a, 42b,...42n) étant imprimée par le processus de fabrication additive en tant qu'au moins une partie d'une couche respective de matériau, à imprimer des éléments d'échafaudage en tant que partie de chaque couche respective de matériau simultanément avec l'impression de la pluralité de spires partiellement complètes (42a, 42b,...42n), et à imprimer des piliers (44a, 44b,...44n) interconnectant des spires successives des spires partiellement complètes (42a, 42b,...42n) dans différentes couches des couches respectives de matériau, **caractérisé par** les étapes consistant à
dans chaque couche respective de matériau, imprimer une pluralité de colonnes (60a, 60b) de la pluralité de spires partiellement complètes (42a, 42b,...42n) décalées les unes des autres autour de différents centres respectifs, imprimer des piliers (44a, 44b,...44n) interconnectant des spires successives des spires partiellement complètes dans chaque colonne respective de façon à interconnecter les spires des spires partiellement complètes ayant un rayon commun et imprimer une liaison (62) entre les colonnes respectives de la pluralité de colonnes de la pluralité de spires partiellement complètes au niveau d'une jonction.

2. Procédé de la revendication 1, dans lequel les piliers (44a, 44b,...44n) sont verticaux ou presque verticaux.

3. Procédé de la revendication 1, dans lequel les éléments d'échafaudage (14) comprennent au moins l'un d'une matrice de matériau de support (14) et d'un noyau (16) interne aux spires partiellement complètes (42a, 42b,...42n) de la bobine (40).

4. Procédé de l'une quelconque des revendications précédentes, dans lequel pour chaque spire partiellement complète (42a, 42b,...42n), imprimer ladite spire partiellement complète successive de sorte qu'elle chevauche un pilier imprimé en dernier des piliers (44a, 44b, ...44n).

5. Procédé de l'une des revendications précédentes, dans lequel certains des piliers (44a, 44b, ...44n) interconnectant des spires successives des spires partiellement complètes (42a, 42b,...42n) sont imprimés à des hauteurs différentes par rapport à d'autres des piliers interconnectant des spires successives des spires partiellement complètes.

6. Procédé de fabrication d'une bobine conductrice (40) par un processus de fabrication additive, ledit procédé comprenant les étapes consistant à imprimer ladite bobine (40) sous forme d'une pluralité de spires partiellement complètes (42a, 42b,...42n), chaque spire partiellement complète (42a, 42b,...42n) étant imprimée par le processus de fabrication additive en tant qu'au moins une partie d'une couche respective de matériau, à imprimer des éléments d'échafaudage en tant que partie de chaque couche respective de matériau simultanément avec l'impression de la pluralité de spires partiellement complètes (42a, 42b,...42n), et à imprimer des piliers (44a, 44b,...44n) interconnectant des spires successives des spires partiellement complètes (42a, 42b,...42n) dans différentes couches des couches respectives de matériau, **caractérisé par** les étapes consistant à
dans chaque couche respective de matériau, imprimer des spires concentriques (60a, 60b) de la pluralité de spires partiellement complètes (42a, 42b,...42n) décalées les unes des autres, imprimer les piliers (44a, 44b,...44n) interconnectant des spires successives des spires partiellement complètes de chacune des spires concentriques (60a, 60b) de la pluralité de spires partiellement complètes de façon à interconnecter les spires des spires partiellement complètes (42a, 42b,...42n) ayant un rayon commun et imprimer une liaison (62) entre les spires concentriques de la pluralité de spires partiellement complètes au niveau d'une jonction.

7. Procédé de la revendication 6, dans lequel les piliers (44a, 44b,...44n) sont verticaux ou presque verticaux.

8. Procédé de la revendication 7, dans lequel les positions des piliers (44a, 44b,...44n) entre des spires successives de la pluralité de spires partiellement complètes (42a, 42b,...42n) de chacune des spires concentriques (60a, 60b) de la pluralité de spires partiellement complètes sont échelonnées sur une circonférence des spires partiellement complètes.

9. Procédé de la revendication 8, dans lequel les éléments d'échafaudage comprennent au moins l'un d'une matrice de matériau de support (14) et d'un noyau (16) interne aux spires partiellement complètes de la bobine.

10. Procédé de l'une des revendications 6 à 9, dans lequel la jonction (62) est une jonction unique.

11. Procédé de l'une des revendications 6 à 10, dans lequel la jonction (62) est à proximité d'une extrémité de colonnes des spires concentriques (60a, 60b) de la pluralité de spires partiellement complètes (42a, 42b,...42n).

12. Procédé de l'une des revendications 6 à 11, dans lequel certains des piliers (44a, 44b, ...44n) interconnectant des spires successives des spires partiellement complètes (42a, 42b,...42n) de chacune des spires concentriques (60a, 60b) de la pluralité de spires partiellement complètes sont imprimés à des hauteurs différentes par rapport à d'autres des piliers interconnectant des spires successives des spires partiellement complètes.

13. Procédé de l'une des revendications 6 à 12, dans lequel les positions des piliers (44a, 44b,...44n) entre des spires successives de la pluralité de spires partiellement complètes (42a, 42b,...42n) de chacune des spires concentriques (60a, 60b) de la pluralité de spires partiellement complètes sont échelonnées sur une circonférence des spires partiellement complètes.

14. Procédé de l'une des revendications 6 à 13, dans lequel dans chaque couche respective de matériau, les spires concentriques (60a, 60b) de la pluralité de spires partiellement complètes (42a, 42b,...42n) sont décalées les unes des autres d'une distance radiale commune.

FIG. 1B

FIG. 1A

FIG. 2A

FIG. 2B

FIG. 3B

FIG. 3A

FIG. 4A

FIG. 4B

# Advantage 1: improved and controllable round density

1.8 turns/mm

FIG. 5A

5 turns/mm

FIG. 5B

10 turns/mm

FIG. 5C

EP 3 993 926 B1

1 column

FIG. 6A

2 columns

FIG. 6B

FIG. 6C

FIG. 6D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62892079

- CN 105632893 B